Europäisches Patentamt

European Patent Office

Office européen des brevets

(19)

(11) Veröffentlichungsnummer: **0 075 183**
A1

(12) **EUROPÄISCHE PATENTANMELDUNG**

(21) Anmeldenummer: 82108236.9

(22) Anmeldetag: 08.09.82

(51) Int. Cl.³: **B 01 J 2/16,** B 01 J 2/12,
A 23 F 5/38

(30) Priorität: 18.09.81 DE 3137110

(43) Veröffentlichungstag der Anmeldung: 30.03.83
Patentblatt 83/13

(84) Benannte Vertragsstaaten: **AT BE CH DE FR GB IT LI NL**

(71) Anmelder: **BAYER AG, Zentralbereich Patente, Marken
und Lizenzen, D-5090 Leverkusen 1, Bayerwerk (DE)**

(72) Erfinder: **Roeder, Henning, Dipl.-Ing., Hoyerbergweg 23,
D-8990 Bodolz/Lindau (B) (DE)**
Erfinder: **Advena, Hans-Jürgen, Dr., In der Hildscheid 14,
D-5068 Odenthal (DE)**
Erfinder: **Eifel, Matthias, Dr., Goethestrasse 57d,
D-4047 Dormagen (DE)**

(54) **Verfahren und Vorrichtung zum Agglomerieren von Schüttgut.**

(57) Bei dem Verfahren lagern sich die Schüttgutpartikel durch Einwirkung einer Agglomerierflüssigkeit zu größeren Partikeln zusammen. Die Agglomeratbildung findet in einer routierenden Trommel 1 mit perforierter Innenfläche 4 statt, in der das Schüttgut umgewälzt wird. Gleichzeitig wird das umgewälzte Schüttgut von einem durch die Perforierung hindurchtretenden Gasstrom aufgelockert. Der rollenden Bewegung des Schüttgutes wird also eine durch den Gasstrom bewirkte Wirbelbewegung überlagert. Durch Einstellung der Drehzahl und der Intensität des Gasstromes können die Agglomerateigenschaften in einem weiten Bereich variiert werden.

0075183

BAYER AKTIENGESELLSCHAFT    5090 Leverkusen, Bayerwerk

Zentralbereich
Patente, Marken und Lizenzen   Ki/bc/bo/c

.j 7. Sep. 1981

Verfahren und Vorrichtung zum Agglomerieren von Schüttgut

Die Erfindung betrifft ein Verfahren und eine Vorrichtung zum Agglomerieren von Schüttgut, wobei der Agglomerationsvorgang durch Aufbaugranulation unter Einwirkung einer Agglomerierflüssigkeit erfolgt.

In der Aufbereitungs- und Verfahrenstechnik ist man seit langem bemüht, pulverförmige Schüttgüter in eine Form zu bringen, die diese Güter z.B. für den Transport oder die weitere Verarbeitung leichter handhabbar macht. Häufig besteht auch die Forderung, Feststoffe die aus Gründen ihrer Wirksamkeit zunächst bewußt auf eine sehr feine Primärkorngröße gebracht wurden, für die Weiterverarbeitung zu agglomerieren. Die Festigkeit solcher Agglomerate spielt dann eine untergeordnetere Rolle, wenn es sich um einen Zwischenzustand handelt, der in nachfolgenden Prozessen ohnehin verändert wird. Ein typisches Beispiel hierfür ist die Herstellung von Agglomeraten zur Weiterverarbeitung zu Tabletten in der pharmazeutischen Industrie.

Im wesentlichen durch den Einfluß der fortschreitenden Lebensmitteltechnologie wurden unter dem Begriff

Le A 21 271

"Instantanisierung" Verfahren entwickelt, die zum Ziel hatten, staubförmige Produkte in geeignete Agglomerate zu überführen, um eine hohe Lösungs- bzw. Dispergiergeschwindigkeit sicherzustellen und Produktverklumpungen bei der Wiederbefeuchtung zu vermeiden. Häufig handelt es sich dabei um Zwischenschritte, wenn solche Produkte industriell weiterverarbeitet werden. Eine Reihe von Anwendungsfällen betrifft aber auch das Endprodukt, z.B. "Instant"-Tee oder -Kaffee. In diesen Fällen soll dem Verbraucher eine besonders einfache und bequeme Handhabung geboten werden. Wegen der erforderlichen Lager- und Transportstabilität spielt dann die Festigkeit der Agglomerate eine wichtige Rolle.

Die wichtigsten Verfahren zur Aufbauagglomeration von staubförmigen Produkten sind die Roll-, Misch- und Wirbelschichtgranulierung sowie die Preßagglomeration. Diese Verfahren werden z.B. in H. Schubert, Chem.-Ing. Techn. 51 (1979), Nr. 4, S. 266 bis 277 beschrieben. G. Nöltner gibt in den Reprints 2 des 3. Internationalen Symposiums Agglomeration einen Überblick von technischen Apparaten zur Agglomerierung von staubförmigen Produkten.

Durch Einbringen von staubförmigen Produkten und Zugabe von Agglomerierflüssigkeit werden darin Agglomerate mit Festkörper- und/oder Flüssigkeitsbrücken erzeugt. Bindemechanismen ohne Materialbrücken kommen hier, wegen ihrer geringen Größe im Agglomerat, nicht zum Tragen.

Le A 21 271

0075183

- 3 -

Das Agglomerationsverfahren ist für die Agglomeratfestigkeit mitentscheidend, da unterschiedliche Trennkräfte die jeweils schwächsten Bindungen zerstören. Durch unterschiedliche Beanspruchungsintensitäten in der Agglomerierapparatur können somit, bei gleichem staubförmigen Produkt, unterschiedliche Agglomeratfestigkeiten erzielt werden.

## 1. Rollagglomeration

Die Rollagglomeration erfolgt meist in einem rotierenden Teller oder einer Trommel. Durch die ständig rollende Bewegung erfolgt eine relativ dichte Zusammenlagerung der Primärpartikel zu kugelförmigen Agglomeraten, mit einem Korngrößenbereich von etwa 1 mm bis zu einigen mm.

## 2. Wirbelschichtagglomeration

Bei diesem Verfahren erfolgt die Zusammenlagerung der Partikel in einem Fließbett. Charakteristisch für das Verfahren ist eine sehr lockere und poröse Agglomeratstruktur mit bizarrer, nicht näher definierter geometrischer äußerer Form. Das Agglomerat ist ebenfalls weitgehend staubfrei und liegt in einem Korngrößenbereich von einigen 100μm bis zu wenigen mm.

## 3. Mischagglomeration

Für die Mischgranulierung kann jeder Feststoffmischer verwendet werden. Durch Zugabe von Agglomerierflüssig-

Le A 21 271

keit wird dem Mischprozeß ein Agglomeriervorgang überlagert. Die Mischintensität ist für die Agglomeratfestigkeit mitentscheidend. Gegenüber den beiden vorgenannten Verfahren besteht je nach Mischertyp der Nachteil darin, daß entweder Agglomerate mit einer geringen
Festigkeit aber einem großen Partikelgrößenbereich oder
relativ feste Agglomerate mit einer relativ engen Partikelgrößenverteilung entstehen.

## 4. Preßagglomeration

Bei der Preßagglomeration (Trockenagglomeration ohne
Flüssigkeit) werden die Kontaktflächen der Primärpartikel durch große Verdichtungskräfte inelastisch verformt. Dadurch entstehen kompakte Agglomerate mit hoher
Festigkeit.

Es leuchtet ein, daß die durch Rollgranulierung und
Preßagglomerierung hergestellten Agglomerate die Forderung einer hohen Lager- und Transportstabilität besser erfüllen als die porösen Agglomerate, die bei der
Wirbelschicht- und Mischagglomeration erhalten werden.
Auf der anderen Seite führt die lockere, poröse Agglomeratstruktur zu sehr guten Löslichkeits- bzw. Dispergiereigenschaften, die bei den durch Roll- und Preßagglomeration hergestellten Agglomeraten nicht gegeben sind.

Die guten Löslichkeits- bzw. Dispergiereigenschaften
beruhen darauf, daß die Flüssigkeit in das offenzel-

Le A 21 271

lige poröse Agglomerat sehr viel schneller eindringen kann, als in die relativ festen kugelförmigen Agglomerate. Nach dem Stand der Technik widerspricht die Forderung nach einer großen Lager- und Transportstabilität einem guten Löslichkeits- bzw. Dispergierverhalten. Je nachdem, welche Forderung an das Endprodukt gestellt wird, muß also das eine odere andere Verfahren ausgewählt werden. Zwischenzustände der Agglomeratstruktur können nicht realisiert werden. Insbesondere ist es nicht möglich, den unter technischen Gesichtspunkten interessanten Kompromiß zu schließen, daß die Agglomerate gerade noch die notwendige mechanische Stabilität besitzen, auf der anderen Seite jedoch schon so locker aufgebaut sind, daß genügend große Lösungs- bzw. Dispergiergeschwindigkeiten erreicht werden.

Hier setzt die Erfindung an. Es liegt die Aufgabe zugrunde, eine Agglomerierapparatur zu entwickeln, die es gestattet, je nach dem Anforderungsprofil des Endproduktes entweder ein stabileres oder ein leichter lösliches bzw. leichter dispergierbares Agglomerat zu erzeugen. Die Umstellung auf andere Agglomerateigenschaften soll nicht mit kostspieligen und zeitraubenden Umbauten verbunden sein. Vielmehr wird angestrebt, die Agglomeratstruktur in ein und derselben Apparatur lediglich durch Variation der Betriebsparameter zu verändern.

Diese Aufgabe wird erfindungsgemäß dadurch gelöst, daß das Schüttgut in einer rotierenden Trommel mit perforierter Innenfläche umgewälzt wird und gleichzeitig von einem durch die Perforierung strömenden Gas aufgelockert wird, wobei nur der Teil der Trommelinnenfläche mit dem Gasstrom beaufschlagt wird, der jeweils mit dem Schüttgut bedeckt ist. Als Gas wird vorteilhaft Luft oder Stickstoff verwendet. Die Trommel wird nur in einem so geringen Maße mit dem Schüttgut gefüllt, daß sich auf der Trommelinnenfläche eine Produktschicht ausbildet, die dünner als der Radius r der Trommel, vorzugsweise dünner als $r/4$ bis $r/2$ ist. Der Grundgedanke der Erfindung besteht darin, daß der rollenden Bewegung der Partikel in der Trommel eine wirbelnde Bewegung im Fließbett (Fluidisierung) überlagert wird. Die Intensität der beiden Bewegungsarten läßt sich über die Drehzahl der Trommel bzw. die Stärke des Gasstromes (Durchsatz) stufenlos einstellen. Wird der Gasstrom ganz abgestellt, so ergibt sich als Grenzfall die reine Rollagglomeration, während umgekehrt bei abgestellter Drehbewegung die reine Wirbelschichtagglomeration resultiert. Durch Einstellung der Drehzahl und der Intensität des Gasstromes können somit zum ersten Mal, alle Zwischenzustände zwischen einem Agglomerat mit hoher Festigkeit aber geringem Löslichkeitsverhalten und sehr geringer Festigkeit aber ausgezeichnetem Löslichkeitsverhalten dargestellt werden. Zur Fixierung der Feststoffbrücken in den Agglomeraten und zur leichteren Handhabung der Agglomerate wird durch Verwenden eines erwärmten Gasstromes das Produkt schon in der Agglomeriertrommel getrocknet. Der Trocknungsgrad kann durch die Tem-

Le A 21 271

peratur und Intensität des Gasstromes sowie der Verweilzeit des Produktes innerhalb der Trommel beeinflußt werden.

Weitere Verbesserungen und Ausgestaltungen des erfindungsgemäßen Verfahrens sind in den Unteransprüchen beschrieben.

Die Vorrichtung zur Durchführung des neuen Agglomerierverfahrens ist erfindungsgemäß gekennzeichnet durch

a) eine drehbare Trommel mit einem auf der Innenseite perforierten Doppelmantel, der durch Zwischenwände, die sich in Längs- und Umfangsrichtung erstrecken, in eine Vielzahl von Kammern unterteilt ist;

b) eine in Umfangsrichtung winkelverstellbare Gaszuführungseinrichtung, die nacheinander jeweils nur den Kammern Gas zuteilt, die gerade von dem Schüttgut überlagert werden;

c) eine innerhalb der Trommel koaxial angeordnete längs- und winkelverstellbare Sprühvorrichtung zum Behandeln des Schüttgutes mit Agglomerierflüssigkeit;

d) sowie eine Produkteintrittsöffnung am einen Ende der Trommel und eine Stauscheibe mit einer Pro-

Le A 21 271

duktaustrittsöffnung bzw. ein Überlaufwehr und eine
Gasaustrittsöffnung am anderen Ende der Trommel.

Gemäß einer Weiterentwicklung ist vorgesehen, daß die
Kammern im Doppelmantel über einstellbare Ventile mit
der Gaszuführungseinrichtung in Verbindung stehen.
Vorzugsweise ist die Trommel so gelagert, daß sie bezüglich ihrer Neigung gegen die Horizontale einstellbar ist, um die Verweilzeit des Produktes in der Trommel beeinflussen zu können.

Die Gaszuführungseinrichtung ist vorteilhaft in der
Weise ausgebildet, daß das Gas durch die hohle Achse
der Trommel zugeführt wird.

Die erfindungsgemäße Apparatur hat den Vorteil, daß
bei ihrer Konstruktion keine grundsätzlich neuen Wege
beschritten werden müssen. Ihre Einzelelemente sind
in der Verfahrenstechnik bekannt. Der apparative Aufwand hält sich in vertretbaren Grenzen.

Im folgenden wird ein Ausführungsbeispiel der Erfindung anhand einer Zeichnung näher erläutert. Es zeigen:

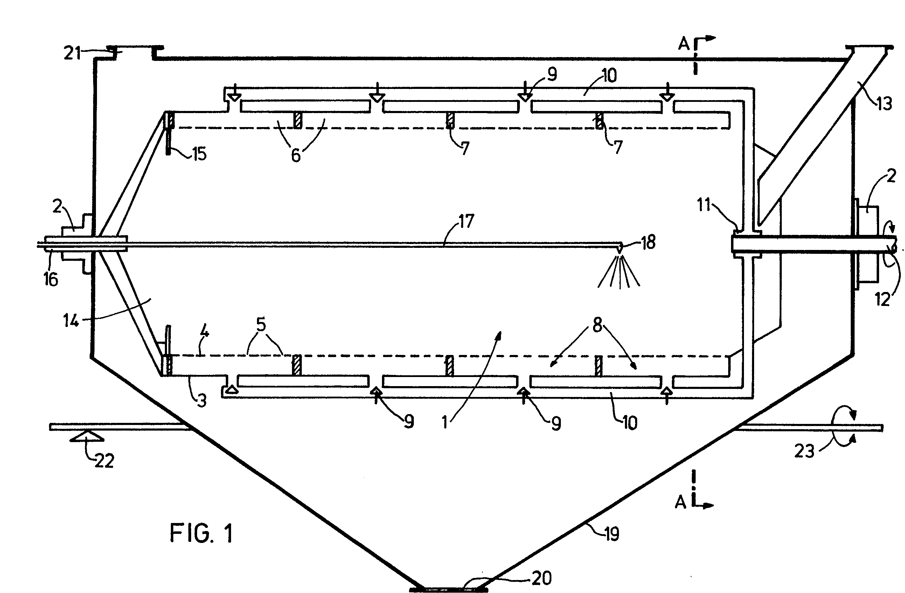

Fig. 1    eine Aufrißdarstellung der Agglomerierapparatur und

Fig. 2    einen Schnitt A/A (Seitenansicht) gemäß
          Fig. 1.

Le A 21 271

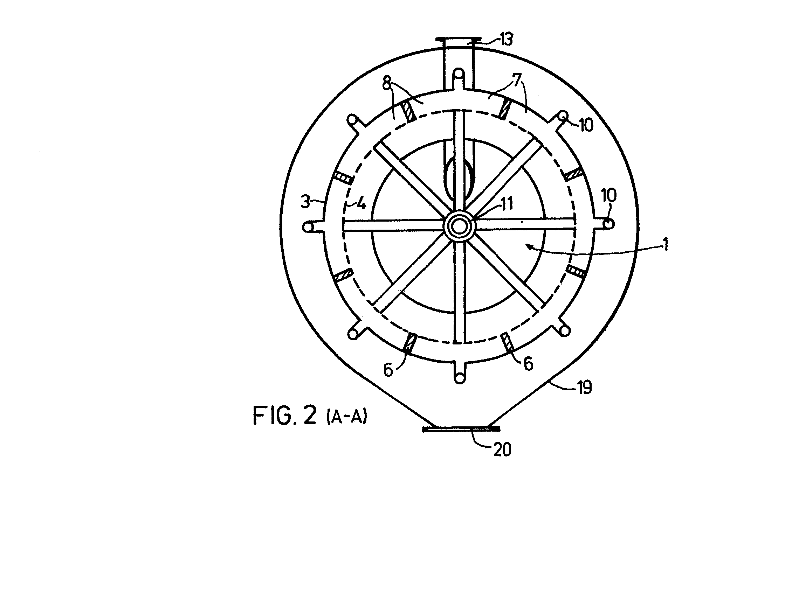

Der wesentliche Teil der Agglomeriervorrichtung besteht aus einer zylindrischen, im wesentlichen horizontal liegenden Trommel 1, die drehbar gelagert ist (Lagerung 2). Die Trommel 1 weist einen Doppelmantel mit einem Außenmantel 3 und einem Innenmantel 4 auf, die einen konzentrischen Ringraum einschließen. Der Innenmantel 4 ist mit Perforationen 5 versehen. Der Ringraum im Doppelmantel ist durch entlang der Mantellinie der Trommel verlaufende, senkrecht auf der Mantelfläche stehende Zwischenwände 6 in Zonen aufgeteilt, die ihrerseits durch senkrecht stehende, in Umfangsrichtung verlaufende Zwischenwände 7 in Kammern 8 unterteilt sind. Eine Kammer im Ringraum wird also jeweils durch zwei longitudinale Zwischenwände 6 und zwei äquatoriale Zwischenwände 7 begrenzt. Die Kammern 8 sind über individuell einstellbare Ventile 9 und außen an der Mantelfläche entlanglaufende Rohre 10, die an der Stirnseite der Trommel um 90° abgewinkelt sind und sternförmig zusammenlaufen (s. Fig. 2), mit einer Gaszuführungseinrichtung 11 verbunden. Sie besteht aus einem in die Hohlwelle 12 der Trommel eingesetztem, winkelverstellbaren Rohr, das in Höhe der sternförmig angeordneten Gaszuführungsrohre 10, eine oder mehrere Bohrungen senkrecht zur Drehachse aufweist. An die Hohlwelle 12 ist eine Gasversorgungsquelle, z.B. ein Kompressor, angeschlossen. Das Gas strömt durch das feststehende Rohr in der Hohlwelle 12 und gelangt von dort aus durch die besagte Bohrung in die Zuleitungsrohre 10 und von dort über die

Ventile 9 in die Kammern 8 und durch die Perforationen 5 schließlich in den Innenraum der Trommel 1. Die Luftverteilung durch die Gaszuführungseinrichtung 11 erfolgt dabei in der Weise, daß nur ein bis vier Zuleitungsrohre 10 mit Luft beaufschlagt werden. Stellt man das Rohr in der Hohlwelle z.B. so ein, daß die Austrittsöffnung nach unten gerichtet ist, so ist immer nur diejenige Längszone im Doppelmantel mit der Gaszuführung verbunden, die gerade unten liegt. Die Zuleitungsrohre 10 bewegen sich also nacheinander mit ihren offenen Enden an der feststehenden Gaszuführungseinrichtung 11 vorbei. Durch entsprechende Winkeleinstellung der Gaszuführungseinrichtung 11, d.h. durch Verdrehung des in der Hohlwelle befindlichen Gaszuführungsrohres kann die Fluidisierungsphase in Bezug auf die Winkellage des Trommelsektors festgelegt werden. Auf diese Weise läßt sich erreichen, daß immer nur diejenigen Kammern in der Trommel begast werden, die gerade mit einer Produktschicht bedeckt sind. Derartige Gaszuführungseinrichtungen sind von ihrer Konstruktion her eng mit den Steuerköpfen verwandt, wie sie für die Flüssigkeitsabsaugung bei Trommelfiltern bekannt sind und brauchen daher hier nicht im Detail beschrieben zu werden. Mit den Ventilen 9 kann die Stärke des in die einzelnen Kammern 8 einströmenden Gasstromes einreguliert werden. Es ist also möglich, die Ausströmgeschwindigkeit des Gases in die Trommel von Kammer zu Kammer in Längsrichtung individuell einzustellen.

Die Zuführung des zu agglomerierenden Gutes, das als Einzelkomponente oder als Mischung verschiedener Bestandteile vorliegen kann, erfolgt über eine externe Dosiereinrichtung durch das Rohr 13 an der Stirnseite der Trommel 1. An der gegenüberliegenden Seite ist die Trommel offen. Der freie Granulataustritt zum Trichter 20 (des Gehäuses 19) wird durch die Höhe des Überlaufwehrs 15 so eingestellt, daß der für ein bestimmtes Produkt erforderliche Füllgrad konstant bleibt. Das Überlaufwehr 15 kann auch durch eine nicht gezeichnete Stauscheibe ersetzt werden. Diese Stauscheibe ist im Durchmesser kleiner als der Durchmesser der inneren Trommel 4, so daß zwischen dieser und der Stauscheibe ein Spalt entsteht. Mit der Spaltweite kann der erforderliche Füllgrad eingestellt werden.

Das Trommellager 2 auf der Produktaustrittsseite ist ebenfalls als Hohlwelle 16 ausgebildet. Durch diese Hohlwelle kann ein Flüssigkeitsrohr 17 mit einer Düse 18 ins Trommelinnere eingeschoben werden. Das Rohr ist sowohl in Längsrichtung als auch im Winkel verstellbar und dient zur Befeuchtung des Produktes mit der Granulierflüssigkeit.

Die gesamte Trommel 1 ist in einem geschlossenen Gehäuse 19 untergebracht. An seinem unteren Ende befindet sich der Granulatauslaß 20. Am oberen Ende ist das Füllrohr 13 für die Zuführung des zu granulierenden Gutes und ein Gasstutzen 21 angebracht. Über diesen Stutzen 21 kann der staubförmige Produktanteil zusam-

Le A 21 271

- 12 -

men mit dem Gasstrom abgezogen und der Feststoffanteil
nach Trennung vom Gasstrom zur Eingangsseite der Apparatur und damit in den Prozeß zurückgeführt werden.

Die gesamte Apparatur kann mit Hilfe des Auflagers
22 und der Winkelverstelleinrichtung 23 bis zu 20°
gegen die Horizontale (steigend oder fallend) geneigt werden.

<u>Betriebsweise</u>

Die neue Agglomerierapparatur eignet sich sowohl für
diskontinuierlichen als auch für kontinuierlichen
Betrieb. Bei diskontinuierlicher Betriebsweise wird
die Trommel so dimensioniert, daß ihr Verhältnis
von Länge zu Durchmesser 0,1 bis 5, vorzugsweise
0,5 bis 1, beträgt. Für die kontinuierliche Betriebsweise wird das Verhältnis von Länge zu Durchmesser zwischen 1 bis 20, vorzugsweise zwischen 2 bis
10 gewählt. Die Drehzahl der Trommel mit dem Durchmesser D kann je nach der gewünschten Agglomerateigenschaft zwischen Null und $43/\sqrt{D}$ 1/min (D in Meter)
gewählt werden.

Die Schüttgutzuführung durch das Füllrohr 13 muß so bemessen werden, daß sich in der Trommel eine Produktschicht ausbildet, die dünner als der Radius r der Trommel, vorzugsweise r/4 bis r/2 ist.

<u>Le A 21 271</u>

Als Gas wird vorzugsweise Luft oder ein anderes inertes Gas, z.B. Stickstoff, verwendet. Durch Erwärmen des Gasstroms können die Feststoffbrücken der Agglomerate in der Trommel fixiert werden, bzw. bei ausreichender Verweilzeit des Produktes fertig getrocknet werden. Die eingestellten Gastemperaturen können 20°C bis 200°C, vorzugsweise 40°C bis 80°C betragen.

Die untenliegende Produktschicht in der Trommel 1 wird durch die Düse 18 mit Agglomerierflüssigkeit besprüht. Als Agglomerierflüssigkeit werden in bekannter Weise Wasser, Lösungsmittel oder Lösungen von Feststoffbrückenbildnern verwendet. Der Luftstrom wird in seiner Stärke so einreguliert, daß bei ruhender Trommel über den untenliegenden, angeströmten Kammern 8 ein Wirbelbett·entsteht. Dies entspricht dem Fall der reinen Wirbelbettagglomeration. Wird jetzt die Trommel 1 in Drehung versetzt, so erfährt das Gut zusätzlich zur Wirbelbewegung eine rollende Bewegung. Durch Einstellung der Trommeldrehzahl und des Gasdurchsatzes können sämtliche Zustände zwischen den beiden Grenzfällen Rollagglomeration und Wirbelschichtagglomeration realisiert werden. Welcher Zustand eingestellt wird, hängt davon ab, ob ein stabileres, aber dafür etwas schwerer löslicheres Agglomerat oder ein zwar instabiles, aber dafür leichter lösliches bzw. dispergierbares Agglomerat gefordert wird. Aufgrund der Unterteilung des Doppelmantels in Längsrichtung und mit Hilfe der einstellbaren Ventile 9 ist es möglich, die Ausströmgeschwindigkeit des Gases dem Fluidisierungsverhalten des Produktes in axialer Richtung in
der Trommel anzupassen.

Die neue Agglomerierapparatur bietet ein vielseitiges
Anwendungsspektrum. Sie ist, wie oben erwähnt, einerseits zur Herstellung von relativ festem, kugelförmigem Granulat geeignet, kann aber auf der anderen
Seite bei entsprechender Betriebsweise auch zur
Herstellung von sogenannten Instant-Produkten verwendet
werden. Das Ausgangsmaterial (Schüttgut) kann in einem
Korngrößenbereich bis 500µm liegen. Vorzugsweise sollte
jedoch die Grenze von 150µm nicht überschritten werden.

Patentansprüche

1) Verfahren zum Agglomerieren von Schüttgut durch Aufbaugranulation unter Einwirkung einer Agglomerierflüssigkeit, dadurch gekennzeichnet, daß das Schüttgut in einer rotierenden Trommel mit perforierter Innenfläche umgewälzt wird und der Teil der Trommelinnenfläche, der jeweils mit dem Schüttgut bedeckt ist, durch die Perforierung hindurch mit einem Gasstrom beaufschlagt wird, so daß das Schüttgut gleichzeitig einer rollenden und wirbelnden Bewegung ausgesetzt wird.

2) Verfahren nach Anspruch 1, dadurch gekennzeichnet, daß die Trommel nur in einem so geringen Maße mit dem Schüttgut gefüllt wird, daß sich auf der Trommelinnenfläche eine Schicht ausbildet, die dünner als der Radius r der Trommel, vorzugsweise dünner als $r/4$ bis $r/2$ ist.

3) Verfahren nach Anspruch 1 bis 2, dadurch gekennzeichnet, daß die Trommelinnenfläche in Längsrichtung gesehen zonenweise mit Gasströmen unterschiedlicher Stärke entsprechend dem Fluidisierungsverhalten des Produktes beaufschlagt wird.

4) Verfahren nach Anspruch 1 bis 3, dadurch gekennzeichnet, daß durch Temperierung des Gases das in der Trommel vorbehandelte Produkt zusätzlich beheizt oder gekühlt wird.

Le A 21 271

5) Verfahren nach Anspruch 1 bis 4, dadurch gekennzeichnet, daß das Schüttgut an dem einen Ende der Trommel kontinuierlich eindosiert wird und am anderen Ende der Trommel das agglomerierte Produkt kontinuierlich abgezogen wird.

6) Vorrichtung zur Durchführung des Verfahrens nach Anspruch 1 bis 5, gekennzeichnet durch

a) eine drehbare Trommel (1) mit einem auf der Innenseite perforierten (5) Doppelmantel (3,4), der durch Zwischenwände (6,7), die sich in Längs- und Umfangsrichtung erstrecken, in eine Vielzahl von Kammern (8) unterteilt ist;

b) eine in Umfangsrichtung winkelverstellbare Gaszuführungseinrichtung (11), die nacheinander jeweils nur den Kammern (8) Gas zuteilt, die gerade von dem Schüttgut überlagert werden;

c) eine innerhalb der Trommel (1) koaxial angeordnete längs- und winkelverstellbare Düse (18) zum Besprühen des Schüttgutes;

d) eine Produkteintrittsöffnung (13) am einen Ende der Trommel und ein Überlaufwehr (15) oder eine Stauscheibe mit einer Produktaustrittsöffnung (14) am anderen Ende der Trommel.

Le A 21 271

0075183

7)  Vorrichtung nach Anspruch 6, dadurch gekennzeichnet, daß die Kammern (8) im Doppelmantel (3,4)
    über einstellbare Ventile (9) mit der Gaszuführungseinrichtung (11) in Verbindung stehen.

8)  Vorrichtung nach Anspruch 6 bis 7, dadurch gekennzeichnet, daß die Trommel (1) bezüglich ihrer
    Neigung gegen die Horizontale verstellbar ist, um
    die Verweilzeit des Produktes in der Trommel einzustellen.

9)  Vorrichtung nach Anspruch 6 bis 8, dadurch gekennzeichnet, daß das Gas durch die hohle Achse
    (12) der Trommel (1) zugeführt wird.

FIG. 1

FIG. 2 (A-A)

# EUROPÄISCHER RECHERCHENBERICHT

**Europäisches Patentamt**

0075183
Nummer der Anmeldung

EP 82 10 8236

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-3 761 549 (D.E. MARSHALL) <br><br> * Spalte 2, Zeile 64 - Spalte 7, Zeile 47; Abbildungen 1,7,8 * | 1,2,4, 9 | B 01 J 2/16 <br> B 01 J 2/12 <br> A 23 F 5/38 |
| Y | GB-A-1 175 384 (POTASSE & ENGRAISE CHIMIQUES S.A.) <br> * Seite 2, Zeile 105 - Seite 5, Zeile 26; Abbildungen 1-6 * | 1,2,4- 7 | |
| A | CH-A- 477 907 (BATTELLE MEMORIAL INSTITUTE) <br> * Spalte 2, Zeile 20 - Spalte 3, Zeile 20; Abbildungen 1,2 * | 1,2 | |
| A | FR-A-2 032 265 (STAUFFER CHEMICAL COMP.) <br> * Seite 4, Zeilen 4-11; Abbildung 1 * | 8 | RECHERCHIERTE SACHGEBIETE (Int. Cl. ³) |
| A | GB-A- 712 082 (NORTON GRINDING WHEEL COMPANY) <br> * Seite 2, Zeilen 60-80; Abbildungen 1,2 * | 6 | B 01 J <br> A 23 F <br> A 23 C |

Der vorliegende Recherchenbericht wurde für alle Patentansprüche erstellt.

| Recherchenort | Abschlußdatum der Recherche | Prüfer |
|---|---|---|
| DEN HAAG | 11-11-1982 | PYFFEROEN K. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82